Europäisches Patentamt

European Patent Office

Office européen des brevets

(11) Veröffentlichungsnummer: **0 402 730**
**A2**

(12) ## EUROPÄISCHE PATENTANMELDUNG

(21) Anmeldenummer: **90110565.0**

(22) Anmeldetag: **05.06.90**

(51) Int. Cl.⁵: **B29C 45/00**

(30) Priorität: **13.06.89 DE 3919333**

(43) Veröffentlichungstag der Anmeldung:
**19.12.90 Patentblatt 90/51**

(84) Benannte Vertragsstaaten:
**AT BE CH DK ES FR GB GR IT LI LU NL SE**

(71) Anmelder: **Krauss-Maffei Aktiengesellschaft**
**Krauss-Maffei-Strasse 2**
**D-8000 München 50(DE)**

(72) Erfinder: **Klotz, Bernd, Dipl.-Ing. (FH)**
**Waldstrasse 3**
**D-8066 Günding(DE)**

(54) **Verfahren zum Herstellen von spritzgegossenen Formteilen aus Kunststoffmaterial.**

(57) Zum Herstellen von zumindest teilweise hohlen Spritzgieß-Formteilen selbst von komplizierter Geometrie wird vorgeschlagen, zunächst die Spritzgießform vollständig mit plastifiziertem Kunststoffmaterial auszufüllen. Anschließend wird ein Druckgas über die Spritzgießform (Werkzeug) in den zu bildenden Hohlraum unter gleichzeitiger Verdrängung des den Hohlraum ausfüllenden Kunststoffmaterials eingepreßt, wobei das verdrängte Kunststoffmaterial aus der Spritzgießform entfernt wird. Nach erfolgter Ausbildung des Hohlraums und Abkühlung des Formteils wird das Druckgas aus dem Formteil abgelassen und das Formteil entfernt.

FIG.2

EP 0 402 730 A2

Die Erfindung bezieht sich auf ein Verfahren gemäß dem Oberbegriff des Patentanspruchs. Ein derartiges Verfahren ist aus der EP-OS 283 207 bekannt.

Aus der US-PS 41 01 617 ist ein Verfahren zum Herstellen von spritzgegossenen, hohlen Kunststoff-Formteilen bekannt, bei dem zusammen mit oder nach dem Einfüllen des plastifizierten Kunststoffmaterials ein Druckgas in den Formhohlraum der Spritzgießform unter hohem Druck eingepreßt wird, wobei nur soviel Kunststoffmasse in die Spritzgießform eingefüllt wird, wie für das resultierende, hohle Formteil erforderlich ist. Das über den Angußkanal der Spritzgießform zugeführte Druckgas verdrängt das eingefüllte Kunststoffmaterial gegen die Wände des Formhohlraums unter Ausbildung einer entsprechenden Kavität in der Kunststoffmasse. Das Druckgas verbleibt solange in der Spritzgießform, bis das eingefüllte Kunststoffmaterial abgekühlt ist. Anschließend werden das Druckgas in die Atmosphäre abgelassen und das fertige Formteil entformt.

Um nur einen Teilbereich eines Formteils hohl auszubilden, ist es aus der EP-OS 283 207 bekannt, das Druckgas nicht über den Angußkanal, sondern an einer oder an mehreren Stellen der Spritzgießform zuzuführen. Die Druckgaszufuhr erfolgt gleichzeitig mit dem Füllen der Spritzgießform mit plastifiziertem Kunststoffmaterial, wobei wiederum nur soviel Kunststoffmasse eingefüllt wird, wie für das teilweise hohle Formteil benötigt wird.

Bei den bekannten Verfahren kühlt sich jedoch das Kunststoffmaterial noch während seiner Verdrängung durch das Druckgas ab, was insbesondere bei relativ großen Formhohlräumen der Fall ist, bei denen in der Füllphase nur ein geringer Innendruck bzw. Füllwiderstand vorhanden ist. Diese frühzeitige Abkühlung führt bei relativ rasch erstarrenden Kunststoffmaterialien zur Bildung von Falten an der Oberfläche der eingeführten Kunststoffmassen, welche bei der Anlegung an die Wände des Formhohlraumes zu sichtbaren Oberflächenfehlern des Formteils führen.

Bei komplizierten Formhohlräumen beispielsweise mit verschiedenen Abschnitten von unterschiedlicher Breite, füllen sich zuerst die Abschnitte mit dem geringsten Füllwiderstand, d. h., den größten Breitenabmessungen, während die Abschnitte mit den geringsten Breitenabmessungen zuletzt gefüllt werden. Dies kann bei den bekannten Verfahren dazu führen, daß das zugeführte Druckgas in solche, noch nicht mit Kunststoffmaterial gefüllte Abschnitte von geringer Breitenabmessung durchbricht, was zu unbrauchbaren, perforierten Formteilen führt. Selbst in günstigen Fällen treten zwischen den sich zu unterschiedlichen Zeiten füllenden Abschnitten des Formteils Bindennähte auf, welche die Formteilqualität beeinträchtigen.

Eine weitere Schwierigkeit besteht darin, daß die Wanddicke der hohlen Formteilabschnitte nur schwer zu steuern ist, da die Verdrängung des eingefüllten Kunststoffmaterials durch das Druckgas keineswegs in allen Fällen gleichbleibend erfolgt, insbesondere nicht bei Formhohlräumen mit Abschnitten von stark unterschiedlicher Breite.

Die Aufgabe der Erfindung besteht demgegenüber darin, bei einem Verfahren der eingangs erwähnten Art selbst bei komplizierten Formhohlräumen eine zufriedenstellende Formteilqualität zu gewährleisten.

Diese Aufgabe wird erfindungsgemäß durch die kennzeichnenden Merkmale des Patentanspruchs gelöst.

Die Erfindung beruht auf der Überlegung, den Formteilbildungsvorgang von dem Hohlraumbildungsvorgang zeitlich zu trennen, wodurch sichergestellt ist, daß sämtliche Abschnitte selbst geometrisch komplizierter Formhohlräume zuverlässig mit vollständig plastifizierter Masse gefüllt sind, bevor die gewünschten Kavitäten des Formteils durch Zufuhr von Druckgas ausgebildet werden. Bei der Zufuhr von Druckgas wird diejenige überschüssige, noch nicht erstarrte Kunststoffmasse, welche den oder die zu bildenden Kavitäten zunächst ausfüllt, aus der Spritzgießform ausgetrieben und gelangt beispielsweise zurück in die Spritzgießmaschine, wo sie im plastifizierten Zustand gehalten und bei dem nächsten Füllvorgang verwendet wird. Die vollständige Befüllung des Formhohlraums mit plastifiziertem Kunststoffmaterial erfolgt in herkömmlicher, sehr gut beherrschbarer Spritzgießtechnik, so daß die Qualität des Formteils, wie Oberflächenbeschaffenheit und Festigkeit, sehr gut kontrollierbar sind. Bei der späteren Hohlraumerzeugung durch das Druckgas ist die Oberflächenbildung wie bei einem massiven Formteil bereits weitgehend abgeschlossen, so daß die Oberflächenqualität bei der anschließenden Hohlraumerzeugung nicht mehr beeinträchtigt werden kann. Da die Wanddicke der hohlen Formteilabschnitte nicht mehr von einem "Aufblasvorgang" überlagert wird, sondern allein von der gleichförmig von außen nach innen sinkenden Erstarrungsgeschwindigkeit des Kunststoffmaterials abhängig ist, gewährleistet das erfindungsgemäße Verfahren eine wesentlich bessere Konstanz des Wanddickenverlaufes.

Die Erfindung wird anhand der Zeichnungen näher erläutert. Es zeigt:

Fig. 1 Eine schematische Darstellung einer nach dem erfindungsgemäßen Verfahren arbeitenden Kunststoffverarbeitungsanlage im Zustand nach einem ersten Verfahrensschritt;

Fig. 2 eine schematische Darstellung der Anlage gemäß Fig. 1 im Zustand nach einem zweiten Verfahrensschritt, und

Fig. 3 einen Schnitt durch ein von der Anlage gemäß Fig. 1 und 2 hergestellten Formteil.

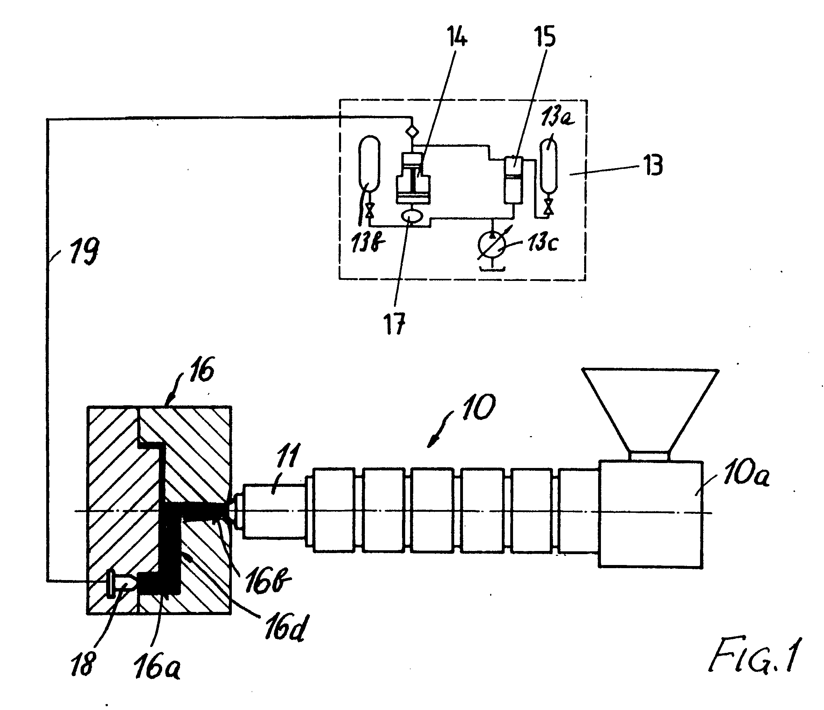

Die in Figur 1 mit zehn bezeichnete Kunststoffverarbeitungsanlage umfaßt eine Kunststoffspritzgießmaschine 10a, ein zweiteiliges Werkzeug 16 und ein Gasdrucksystem 13 mit Gastanks 13a, 13b für ein in ertes Druckgas, z. B. Stickstoff, das unter hohem Druck bis 1000 bar und mehr stehen kann. An ihrem Austrittsende weist die Spritzgießmaschine 10a einen Dosierkopf 11 auf, der über eine hydraulische Antriebsvorrichtung gesteuert wird.

Die Gastanks 13a, 13b sind mit Druckspeichern 14, 15 verbunden, die von einer Pumpe 13c mit verstellbarem Volumen geladen werden. In dem Druckladekreis befindet sich ein Proportionalventil 17, welches eine vom Druck der austretenden Kunststoffmasse abhängige Steuerung des Gasdrucks in einer Gaszuführung 19 ermöglicht. Die Gaszuführung 19 führt zu einem Gasverschlußventil 18, welches in dem Werkzeug 16 eingebaut ist.

Das Gasverschlußventil 18 mündet direkt in den Formhohlraum 16a des Werkzeugs 16. Der Dosierkopf 11 mündet in einen Angußkanal 16b des Werkzeugs 16.

Das in der Kunststoffspritzgießmaschine 10a plastifizierte Kunststoffmaterial wird über den Angußkanal 16b solange dem Formhohlraum 16a des Werkzeugs 16 zugeführt, bis der Formhohlraum 16a vollständig mit plastifizierter Kunststoffmasse gefüllt ist (Zustand gemäß Fig. 1). Während dieses Füllvorganges kann durch Zufuhr von Druckgas mit niedrigem Druck von beispielsweise 10 bis 50 bar über das - eigentlich für spätere Zwecke vorgesehene - Gasventil 18 ein "Gasgegendruck" in dem Formhohlraum 16a aufgebaut werden, falls der Formhohlraum 16a wie im dargestellten Beispielsfalle einen Abschnitt 16d mit großer Breitenabmessung aufweist. Infolge des "Gasgegendrucks" wird ein künstlicher Füllwiderstand erzeugt, der eine noch bessere Oberflächenqualität des Formteils zur Folge hat. Nach Erreichen eines vorgegebenen Gasgegendrucks wird der Druck bei zunehmender Füllung des Formhohlraums 16a auf einem konstanten Wert gehalten, bis eine vollständige Füllung erfolgt ist.

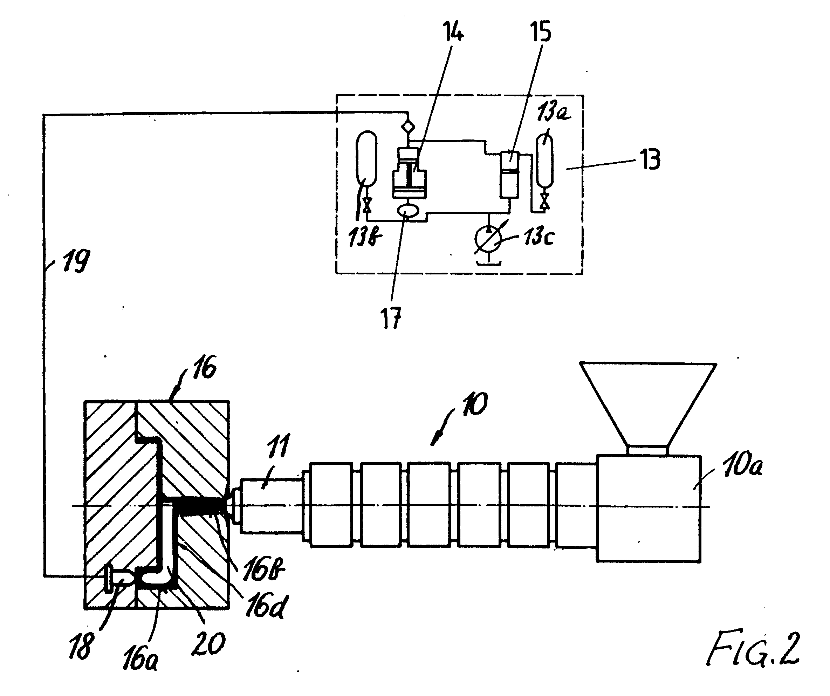

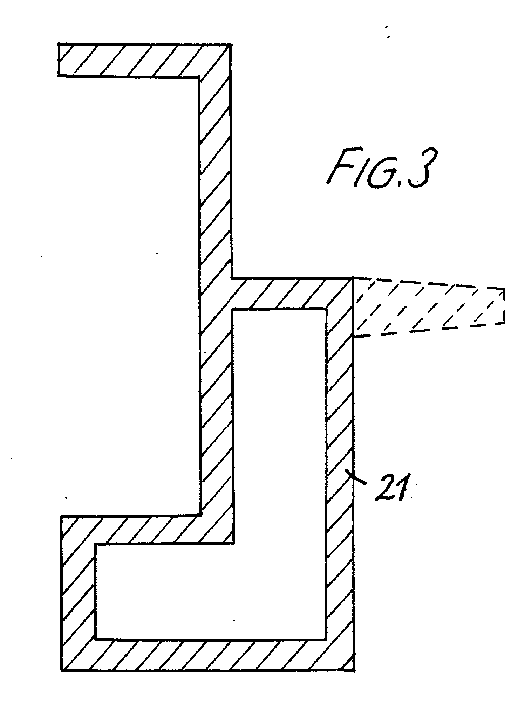

Nach erfolgter, vollständiger Füllung des Formhohlraums 16a wird über das Gasventil 18 ein Druckgas mit hohem Druck von beispielsweise 50 bis 400 bar in den Formhohlraum 16a geleitet, wodurch das noch nicht erstarrte Kunststoffmaterial im Kernbereich des Abschnitts 16d in Richtung Angußkanal 16b und damit aus dem Werkzeug 16 verdrängt wird. Über den Angußkanal 16b gelangt das verdrängte Kunststoffmaterial zurück in die Spritzgießmaschine 10a wo es im plastifizierten Zustand gehalten und bei der nächsten Füllung des Werkzeugs 16 verwendet wird. Bei dem Rückfluß des verdrängten Kunststoffmaterials wird die nicht dargestellte Plastifizierschnecke der Kunststoffspritzgießmaschine 10a zurückgedrückt. Die Verdrängung von Material im Kern der eingefüllten Kunststoffmasse durch das Druckgas erfolgt solange, bis sich die sich ausbildende Gasblase 20 (Fig. 2) bis zum Angußkanal 16b des Werkzeugs 16 ausgedehnt hat und dabei die zurückgedrückte Plastifizierschnecke der Spritzgießmaschine 10a an einer definierten Stellung angelangt ist. Bei Erreichen dieser Stellung wird der weitere Masserückfluß durch Schließen einer nicht näher dargestellten Verschlußdüse im Dosierkopf 11 unterbunden. Bei weiterer Zuführung von Druckgas baut sich in der Gasblase 20 ein erhöhter Gasdruck auf, der die Formteilwandung des Abschnitts 16d während der sich anschließenden Abkühlung des Kunststoffmaterials gegen die Wandung des Formhohlraums 16a preßt. Nach erfolgter Abkühlung wird das Druckgas aus der Gasblase 20 in die Druckspeicher 14, 15 zurückgeführt und dann das fertige, in Figur 3 gezeigte Formteil 21 entformt. Der in Fig. 3 gestrichelt angedeutete Anguß des Formteils 21 wird später von dem Formteil 21 abgetrennt.

## Ansprüche

Verfahren zum Herstellen von spritzgegossenen Formteilen aus Kunststoffmaterial, welche zumindest in einem Teilbereich hohl ausgebildet sind, bei dem
- in eine Spritzgießform plastifiziertes Kunststoffmaterial und ein Druckgas eingebracht werden;
- das Druckgas nach erfolgter Ausbildung des Hohlraums in dem Teilbereich und Abkühlung des Formteils aus dem Formteil abgelassen wird, und
- das Formteil entformt wird,
**dadurch gekennzeichnet**, daß zunächst die Spritzgießform vollständig mit Kunststoffmaterial gefüllt wird und daß danach das Druckgas in den zu bildenden Hohlraum unter gleichzeitiger Verdrängung des den Hohlraum ausfüllenden Kunststoffmaterials eingepresst wird, wobei das verdrängte Kunststoffmaterial aus der Spritzgießform entfernt wird.

FIG.1

FIG.2

FIG.3

21